# EUROPEAN PATENT APPLICATION

(11) **EP 1 311 106 A1**
(43) Date of publication of application: **14.05.2003**
(21) Application number: 02079445.9
(22) Date of filing: 25.10.2002
(51) Int. Cl.: H04N 1/00, H04N 1/19

(54) **Scan module CCD used as machine control sensor**

(30) Priority: 07.11.2001 US 36587
(71) Applicant: EASTMAN KODAK COMPANY, Rochester, New York 14650 (US)
(72) Inventor: Tesavis, Carl Joseph, c/o Eastman Kodak Company, Rochester, New York 14650-2201 (US); Olesik, Joseph T., c/o Eastman Kodak Company, Rochester, New York 14650-2201 (US); Pamper, James R., c/o Eastman Kodak Company, Rochester, New York 14650-2201 (US); Barton, Mark A., c/o Eastman Kodak Company, Rochester, New York 14650-2201 (US)
(74) Representative: Parent, Yves

(57) **Abstract**

According to one aspect of the present invention a scanner comprises a transport mechanism for moving a document. A sensor detects a leading edge and a trailing edge of the document. The sensor turns off a drive mechanism when a leading edge of the document is detected. A drive mechanism is started when a trailing edge of a document is detected. A camera scans the document and detects a skew angle of a leading edge and a trailing edge of the document. A front end controller receives a digital signal from the camera and detects the document in a field of the camera within a specified range of pixels.

## Description

This invention relates in general to scanners and in particular to sensors in scanners which control operation of the scanner cameras and paper transport.

Digital scanners use a number of transmissive or reflective electro-optical sensors to control the movement of paper through the automatic document feeding (ADF) portion of a scanner and the camera movement in the platen section. In a typical sheet fed scanner there is a first sensor to detect the presence of a sheet in the transport mechanism. This first sensor turns off the feeder motor when the sheet passes in front of the sensor and reactivates the feeder motor after the sheet passes beyond the sensor. There are typically five additional sensors in a line which detect skew of the document in the transport mechanism. Document skew information is necessary to determine when to turn the camera on so that portions of a skewed document are not lost in the scanning process. These six sensors add additional cost to the manufacture of scanners.

Other prior art attempts to solve this problem have not been completely successful. U.S. Patent No. 5,384,621 which uses a charged coupled device (CCD) to detect the skew of a document on a platen by the use of a CCD with multi-frequency detection. In this patent, however, the paper is not moving.

In the low volume production scanner market the unit manufacturing cost must be minimized in order for a product to be competitive. A major cost driver is the number of sensors. In order to control the movement of paper in automatic document feeding and the camera in the platen portion of the scanner there is a requirement for multiple sensors. It would be desirable to provide a scanner using fewer sensors thereby reducing the cost of the scanner.

According to one aspect of the present invention a scanner comprises a transport mechanism for moving a document. A sensor detects a leading edge and a trailing edge of the document. The sensor turns off a drive mechanism when a leading edge of the document is detected. A drive mechanism is started when a trailing edge of a document is detected. A camera scans the document and detects a skew angle of a leading edge and a trailing edge of the document. A front end controller receives a digital signal from the camera and detects the document in a field of the camera within a specified range of pixels.

According to the present invention a scanner controls the feeding and imaging of documents by using a CCD camera as both scanner and sensor. The scanner has limited sensing capability provided by the ultrasonic double document sensor along with special registers and interrupts provided by the front end controller imaging field programmable gate array here after referred to as (FPGA). The special features of the front end controller (FEC) FPGA provide real-time sensing of pixel data as captured by the camera CCDs enabling a second sensing means in addition to ultrasonic document detection subsystem (UDDS).

This invention represents a unique method for using the CCD of the scanners camera to replace multiple individual sensors, the control electronics associated with the sensors, and the cost of the sensors. This is done by adding logic to the front-end hardware that receives data from the camera, and by controlling that hardware in the scanner firmware. This logic will provide the control firmware the ability to detect paper entering the cameras CCD in the automatic document feeder and detect contrasting features on the underside of the platen portion of a low volume scanner. This detection capability will allow the scanners mechanisms to be controlled with a minimum number of additional sensors. One additional sensor is only required in the ADF portion to avoid missing sensor events based on image content and to maintain the inter-document gap.

According to one embodiment of the present invention, the CCD of the scanners scan modules, sometimes referred to as cameras, also operate as sensors and are used to locate and measure mechanical offsets from feeder to scan module and from home to scan area of the glass platen.

Figure 1 is a functional block diagram showing inputs to a front end controller according to the present invention.

Figure 2 is a side view of a scanner according to the present invention.

Figure 3 is a top view of the scanner shown in Figure 2.

Figure 4 is a view of the underside of the platen housing depicting platen type label features.

Figure 5 is a timing diagram for the automatic document feeder portion of the scanner according to the present invention.

Figure 6 is a timing diagram for a scanner according to the present invention showing detection of skewed documents.

Figure 7 is a timing diagram for a scanner according to the present invention used as a platen scanner.

Figure 8 is a timing diagram showing the homing cycle of a scanner according to the present invention used as a platen scanner.

The present invention will be directed in particular to elements forming part of, or in cooperation more directly with the apparatus in accordance with the present invention. It is to be understood that elements not specifically shown or described may take various forms well known to those skilled in the art.

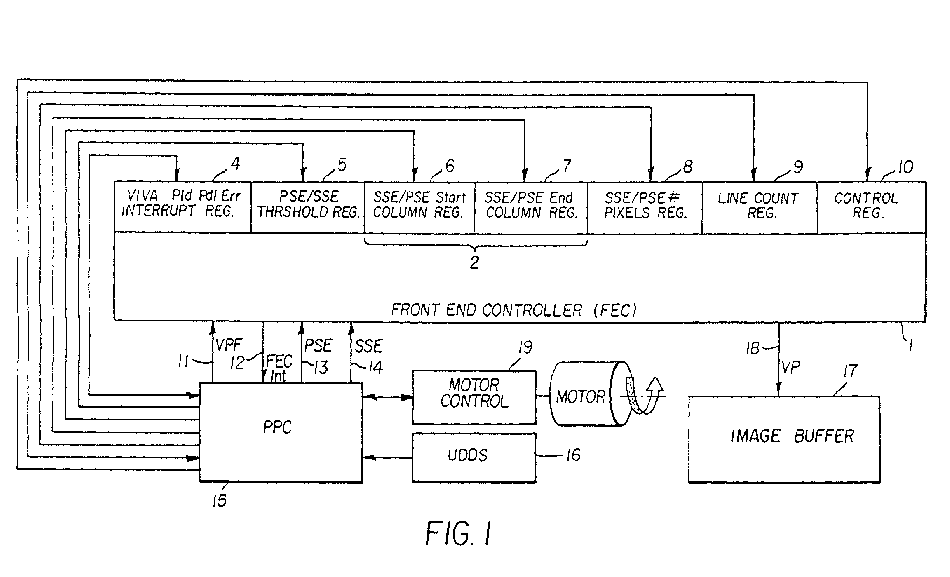

Referring now to Figure 1 the sensing capability of the front end controller (FEC) 1 is programmable from a micro controller by means of a series of registers. The FEC 1 provides two types of sensing. A typical micro controller that may be used is a power PC 15 available from Motorola Corporation. The micro controller receives inputs from and controls outputs to the ultrasonic document detection system (UDDS) 16, the FEC 1 and the motor controller 19. Both sensing functions (primary and secondary) require the start 6 and end column registers 7 be set indicating the starting and ending pixel positions of the CCD which will be included by the logic to determine if the sensor has detected a transition. A low to high transition occurs when a number of pixels greater than or equal to the number programmed in the number pixels register 8 become greater than the value in the threshold register 5. A corresponding high to low transition occurs when this number of pixels has their values become less or greater than the threshold register 5. In either transition the internal FEC signal edge detect reflects the current state of the pixel detect logic. The number of pixels 8, start 6 and stop 7 columns and the threshold register 5 values are programmable by setting their values in the FEC 1 registers. When a transition occurs there will be an interrupt generated on the power PC CPU (PPC) 15. There is a free running line count register 9 to keep track of where in the image an edge is detected. The power PC 15 will determine the cause of the interrupt by reading the interrupt status register 4 of the FEC 1.

This sensing capability is replicated in the form of a primary and secondary sensor. The primary sensor of the FEC uses the internal edge detect signal, the input primary sensor enable 13 and valid page force 11 signals to generate the output valid page signal 18. The transition of the valid page signal results in an interrupt 12 from the FEC 1 to the power PC 15. The secondary sensor has the same capability of the primary sensor except that it does not generate valid page on edge detect instead any state change of the FEC edge detect signal results in an interrupt to the power PC CPU (Note: as the name implies valid page force can always force valid page). The purpose of the primary sensor is to provide real-time events to control the scanner mechanisms for the purpose of storing an image in the image buffer and is used in the ADF mode. The purpose of the secondary sensor is to detect transitions as previously defined to provide real-time sensing capability with the possibility of not storing an image in the image buffer. This is used primarily for platen motion control and ADF printer zone detection.

The scanner functions in two main modes. This section describes the control requirements for the ADF mode. In general, the FEC 1 must provide the functionality to permit the power PPC 15 the ability to capture images for documents fed through the ADF portion 34 of the scanner even if they are not fed squarely to the CCD. This dictates that there be the ability to capture pixels from the image, which arrive early 70 (before the time to travel the distance from the UDDS to the CCD). The FEC must latch this condition so that image content does not allow valid page to be erroneously removed while the document is known to be present as indicated by the UDDS signal and reflected in the primary camera sensor enable (PSE). Then the FEC must provide a means to capture pixels, which remain in the CCD view late 71 due to document skew on the trailing edge. In other words, there must be a means to accurately capture an image with little or no chance of loosing image data. The only time the possibility exists for image data to be lost in during the small window of time late pixels are being captured and only if there is unusual image content 58 in that brief period that fools the FEC edge detect logic.

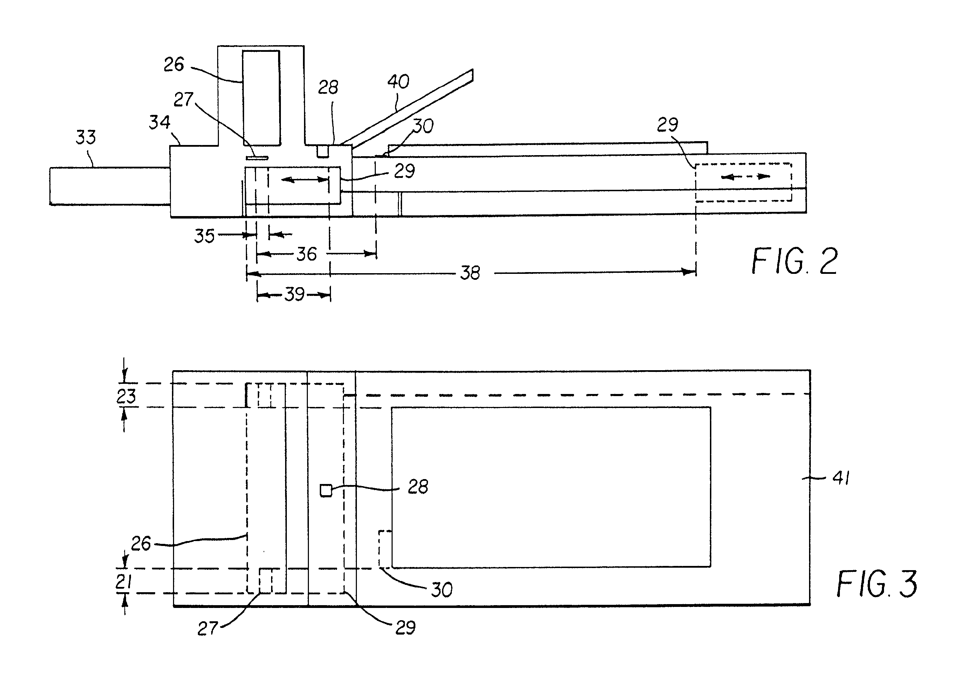

There are two entities, which must be managed when the scanner is in the ADF scanning mode namely the document and their corresponding images. In the ADF mode the documents (pieces of paper) are automatically moved from the input tray 40 through the imaging system to the output tray 33 as shown in Figure 2. The coordination of a number of mechanisms and electronic devices are required to do this. The feeder clutch when energized picks a document from the input tray 40 and engages it with the rollers of the ADF 34. Once the document is in the ADF 34 it will be moved at a constant velocity through the upper and lower CCDs until it ends up in the output tray. The purpose of moving the paper through the CCDs 26 and 29 is to capture a digital version of the image on front and rear side of the document. The image data is controlled by the logic of the FEC FPGA's 1. Controlling this process so that a predictable throughput can be maintained requires real-time feedback from the sensors. The timing diagram depicted in Figure 3 shows the coordination of the required signals to move and image two documents.

First, the feeder clutch 51 is energized by the PPC until the document is detected by the UDDS 52 at which point it 51 is turned off. The UDDS signal 52 is received by the PPC 15 and remains enabled until the document exits 59 the UDDS 28. Given that the document is moving at a constant velocity and the UDDS 28 is a known distance 39 from the CCD aperture the PPC can begin a timer to determine when the document will enter the CCD 26 and 29.

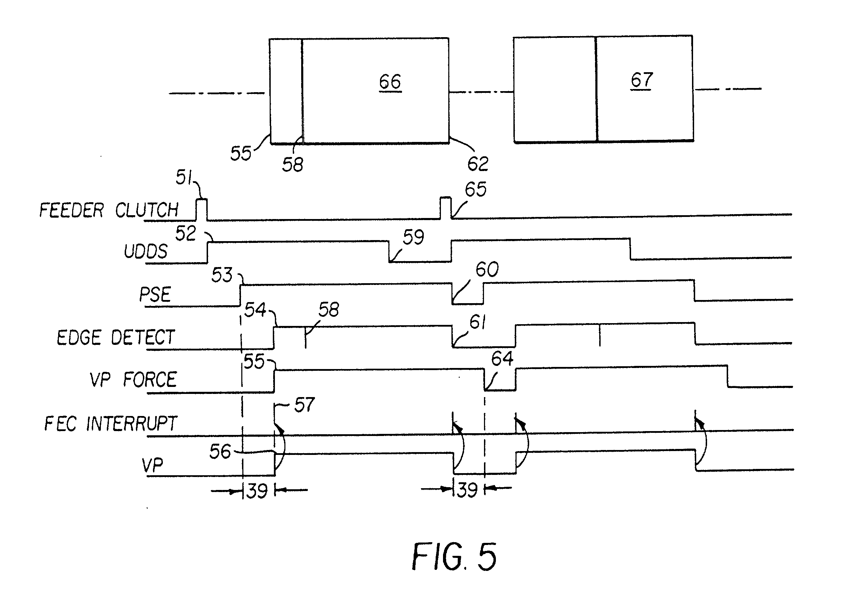

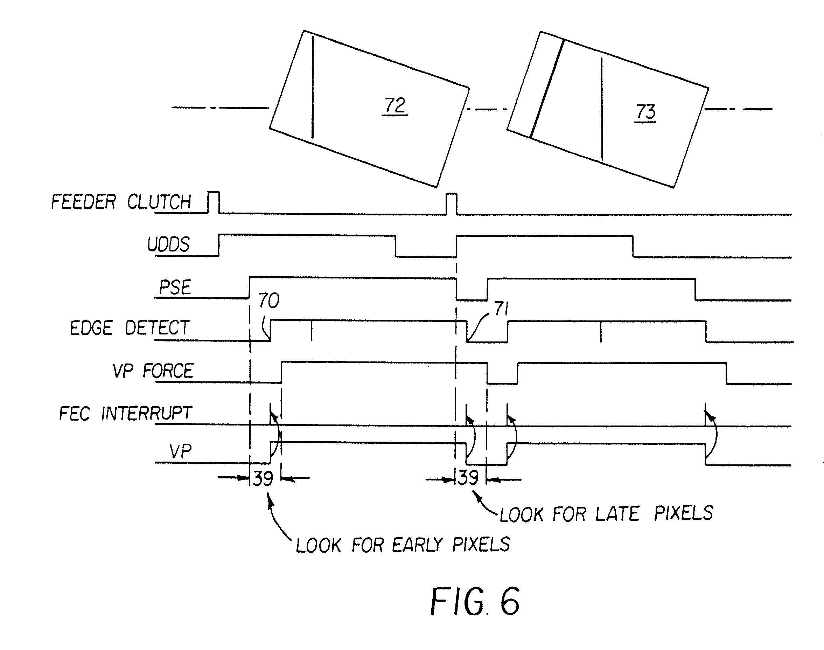

The primary sensor enable signal 53 when active allows the FEC edge detect logic 1 to recognize the documents presence by detecting pixels at the CCD per the values written to the FEC control registers 4-10. This capability is required for documents not fed squarely with respect to the CCD. In this case there must be a means to capture image data prior to the timer event to avoid lost image data due to document skew. See Figure 5, 70 versus 54 of Figure 6.

At the point the FEC primary sensor 13 detects pixels, as indicated by the edge detect 54, it will set the valid page signal allowing the imaging hardware and image buffers17 to process and capture the image 66, 67. At the same point the FEC will interrupt 57 and 12 the PPC 15 allowing it to determine that the image is being processed.

In the case when the document is fed squarely the document will reach the CCD 54 at the point the timer is expiring. At this point the valid page force 55 will be set active by the PPC which forces the FEC 1 to generate valid page 18 and 55 if it has not already done so. It is likely, for square fed documents, that the FEC primary sensor will also see pixels at the same instant 54, in either case the valid page (VP) 56 interrupt will be generated . There may be documents whose image content is of such a nature that the edge detect logic does not detect the threshold. The valid page force signal 11 and 55 results in an image being captured for documents with such image content and avoids a lost image even if it is invisible to the CCD 26 and 29.

Once the edge detect logic has recognized an image 54 or the valid page force signal is enabled 55 with the PSE signal 53 enabled the FEC logic 1 changes state and latches the valid page signal high 56. When in this state the FEC 1 does not reflect the edge detect signal 58 changes in valid page 56. The FEC remains in this state until the primary sensor enable signal is set low 60 by the PPC 15 at the point the document exits the UDDS 59 + (the time to travel distance 39) 60. In the case when the document is fed squarely to the CCD the edge detect signal will go inactive at about this same time 61. Latching this transition allows documents with image content that is constantly below the sensor threshold to be processed properly and ignore features which could fool the FEC 1 pixel detect logic such as a dark line parallel to the CCD 58. The PPC will use a timer to keep valid page force 55 active until the PSE signal goes inactive 60 + (the time for the document to travel the distance 39 and 2) 64. This period of time is when pixels that appear late will be captured 71. An example of late pixels occurring is the trailing edge of a skewed document 72, 73 shown in Figure 5, 71.

The timing diagrams also show the fact that in order to maintain the required throughout and given free space in the image buffer the feeder clutch needs to be activated to feed the next document prior to the previous document images being completely captured 65.

The platen 41 mode allows a user the ability to scan documents which they do not want to feed through the ADF portion 34 of the scanner. This may be because the documents have odd features as previously described or they are to delicate or valuable to feed automatically.

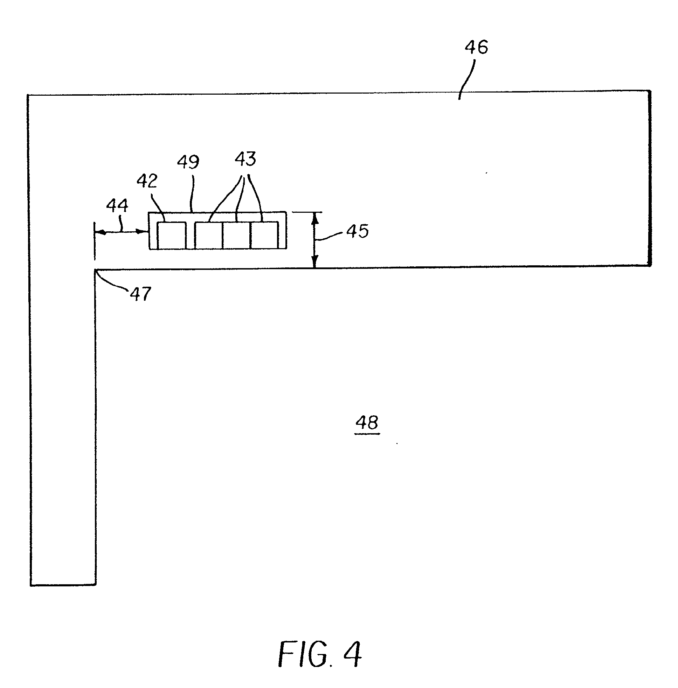

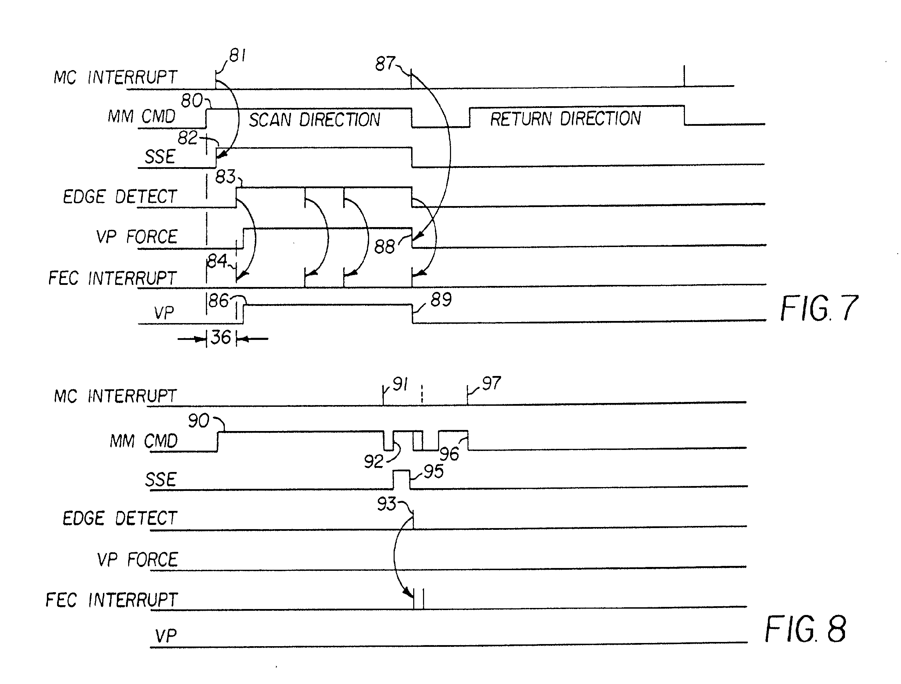

This mode of operation has minimally two phases namely the scan phase and the home phase. Both of these phases will use the secondary sensor of the FEC FPGA 1 and the motor controller interface. Initially the PPC will command the platen motor to move the lower camera from home to a distance in steps equal to the length of the move 38 in the scan direction at the velocity required for the specified resolution as shown in Figure 8, 80. The motor controller 19 interface will also provide a parameter to the move command, which indicates a number of steps into the move to report an intermediate event 81. This event will generate an interrupt 81 to the PPC at the instant the motor controller CPU has detected it has moved that intermediate number of steps. The motor controller 19 will do this while it maintains the motion of the camera without varying its velocity. This is required so that the power PC can enable the secondary sensor 14 just prior to reaching the platen type label 30 feature while previously ignoring features of the underside of the platen which may have triggered a false FEC interrupt 12. Once this event has been received 81 by the PPC it will set the FEC 1 registers 4-10 related to the secondary sensor 14 and enable secondary camera sensor enable (SSE) 82 so that an edge detect event 83 will trigger an interrupt 84. When the camera reaches the platen type label with the SSE setup, as previously described, an interrupt is received by the PPC generated by the FEC 12 it will in turn generate valid page 86 and the imaging hardware will begin capturing the image in the image buffer 17 and 18. This is possible given the dimensions of certain features of the scanner are defined and known to be within specified tolerances. These include the dimensions of the white patch 21 and 23 and the dimensions of the platen label 42-47 and 49 and their positions relative to the imaging area 48 and home 35 and 36. A typical platen type label is depicted in Figure 4. The platen type label has features which allows the scanner system to identify the type and size of the attached platen by capturing an image of it and analyzing characteristics of the image compared to known values as well as the location and size of the imaging area. The motor controller 19 CPU will eventually recognize a point near the end of the move 87 and notify the PPC that it is about to decelerate via an interrupt 88. The PPC will deactivate valid page force 88 as well as SSE 82 and the FEC 1 will lower valid page 89 and the image capture will end.

At this point the power PC 15 will direct the motor controller 19 to move the camera in the home direction, at a high speed, distance 90 which brings it close to home just prior to the lower white patch 27. When this move is completed the motor controller 19 will interrupt the motor control (MC) 91 indicating this event. At this point the PPC will setup the secondary sensor 14 of the FEC 1 to detect the edge of the lower white patch 27 and enable the SSE 95. The PPC 15 will then command the motor controller 19 to slow step in the home direction 92 and will receive an interrupt from the FEC 93 when the white patch label is detected. At that instant the PPC 15 will command the motor controller 19 to stop the platen motor. The lower camera will now be a known number of steps from home proportional with the width of the white patch 21 and the PPC will command the motor controller 19 to slow step that number of steps 96. The motor controller 19 will interrupt the PPC when this move is complete 97 and the camera will be home completing the platen scan.

The invention has been described in detail with particular reference to certain preferred embodiments thereof, but it will be understood that variations and modifications can be effected within the scope of the invention.

## Claims

1. A scanner comprising:
a transport mechanism for moving a document;
a sensor for detecting a leading edge and trailing edge of said document;
wherein said sensor turns off a drive mechanism when a leading edge of said document is detected and starts a drive mechanism when a trailing edge of said document is detected;
a camera for scanning said document and detecting a skew angle of a leading edge and a skew angle of a trailing edge of said document; and
a front-end controller which receives a digital signal from said camera and detects said document in a field of said camera within a specified range of pixels.

2. A scanner as in claim 1 comprising:
a micro controller which activates said camera for image capture only during the presence of said document in said camera field.

3. A scanner as in claim 1 wherein said front-end controller and said camera are a single unit.

4. A scanner as in claim 2 wherein said front end controller is comprised of hardware and software.

5. A scanner comprising:
a transport mechanism for moving a document;
a sensor for detecting a leading edge and trailing edge of said document;
wherein said sensor turns off a drive mechanism when a leading of said document is detected and starts a drive mechanism when a trailing edge of said document is detected;
a first camera for scanning said document and detecting a skew angle of a leading edge and a skew angle of a trailing edge of said document; and
a front-end controller which receives a digital signal from said first camera and detects said document in a field of said first camera within a specified range of pixels.

6. A scanner as in claim 5 comprising:
a micro controller which activates said first camera for image capture only during the presence of said document in said first camera field.

7. A scanner as in claim 5 wherein said front-end controller and said first camera are a single unit.

8. A scanner as in claim 5 wherein said front end controller is comprised of hardware and software.

9. A scanner as in claim 1 wherein said scanner comprises an automatic document feeder.

10. A method of scanning a document comprising:
transporting a document past a sensor;
sensing a leading edge of said document;
turning off a drive mechanism when said leading edge of said document is detected;
sensing a trailing edge of said document;
starting said drive mechanism when said trailing edge of said document is detected;
scanning said document with a camera;
detecting a skew angle of said leading edge and said trailing edge of said document; and
capturing an image of said document when said document is in front of said camera.
